# EUROPEAN PATENT APPLICATION

(11) **EP 3 354 911 A1**
(43) Date of publication of application: **01.08.2018**
(21) Application number: 17153474.6
(22) Date of filing: 27.01.2017
(51) Int. Cl.: F16B 21/08

(54) **FASTENING ELEMENT, FASTENING ARRANGEMENT AND FASTENING SYSTEM**

(71) Applicant: Newfrey LLC, New Britain, CT 06053 (US)
(72) Inventor: Kempf, Christian, 35394 Giessen (DE); Gerlach, Wolfgang, 35394 Giessen (DE); Rosemann, Frank, 35394 Giessen (DE); Lautner, Siegfried, 35394 Giessen (DE)
(74) Representative: SBD IPAdmin

(57) **Abstract**

Fastening element (10) comprising a clamping portion (12) and an anchoring portion (14) for anchoring the fastening element in a hole (16) in a component (84), wherein the anchoring portion (14) has a shank extending along a longitudinal axis (X) from a head end to a foot end, and a metal insert (46) having a free end and a mounted end embedded in the shank, wherein the metal insert (46) extends along a holding axis, wherein the holding axis (Xh) forms a non-zero angle with the longitudinal axis (X), wherein the shank comprises an aperture (38) between the head end and the metal insert (46), and wherein the free end of the metal insert (46) faces the aperture (38).

## Description

### FIELD OF THE INVENTION

The present invention relates to a fastening element comprising a clamping portion and an anchoring portion for anchoring the fastening element in a hole in a component, to a fastening arrangement and to a fastening system.

### BACKGROUND OF THE INVENTION

Fastening element are used in several industries. In particular, in automobile construction, such fastening elements are used to fasten structural parts to a supporting part, for example provided with an opening. This is designed to make assembly possible by a simple insertion operation with little force and to allow the assembled fastening element to transfer holding forces to the supporting part. The supporting part can have a hole with various lengths and/or various diameters. The challenge for such fastening element is to be suitable for various lengths and/or diameters of supporting openings and is to be able to transmit high holding forces even in the case of relatively long supporting openings without back taper.

GB1348753A discloses a fastening element of plastics material having a head part and a shank part which comprises a spring leg rigidly attached to the head part and a freely laterally deflectable leg, the legs being connected by a nose at the end of the first-mentioned leg remote from the head and provided with clamping shoulders for securing the fastening element in an opening of a wall, wherein each leg is stiffened by an inwardly extending thickening extending only over half the width of the leg, the stiffening on the legs being located in offset relation to one another. Such fastening element are provided for through hole only and are not adaptable to blind hole.

DE202012102428U1 discloses a fastening element for fastening in a supporting opening of a supporting part having a shank and a plurality of elastically bendable holding lamellae which are fastened to the shank. Such fastening element allows an anchoring in a blind hole or in a through hole. However, the holding force for the anchorage of the fastening element can be compromised. Besides, such fastening element can have a low adaptability to different hole arrangements.

The object of the present invention is to go some way towards solving or at least mitigating the problems set out above. The invention aims to provide a robust fastening element suited to relatively large workpiece members which may require relatively large anchoring portion. The invention aims to provide a fastening element which can adapt to the shape or the function of the structural part.

It is also a goal of the present invention to provide a robust fastening system and a robust fastening arrangement to secure two workpiece members together with a simple assembly and a reduced number of parts.

### SUMMARY OF THE INVENTION

To this aim, according to the invention, it is provided a fastening element comprising a clamping portion and an anchoring portion for anchoring the fastening element in a hole (in particular a blind hole) in a component, wherein the anchoring portion has a shank extending along a longitudinal axis from a head end to a foot end, and a metal insert having a free end and a mounted end embedded in the shank, wherein the metal insert extends along a holding axis, wherein the holding axis forms a non-zero angle with the longitudinal axis, wherein the shank comprises an aperture between the head end and the metal insert, and wherein the free end of the metal insert faces the aperture.

Such fastening element is easy to manufacture, with the metal insert being partly embedded in the shank. Besides, the material of the insert allows an elastic or plastic deformation of the metal insert, which provides a secure fastening. The fastening element is easy to adapt to different shape and/or function of a structural parts and/or a supporting part and can be used in blind holes or through holes of different diameters. The free end of the metal insert extends in front of the aperture.

In preferred embodiments, the holding axis forms an angle between 30 and 90 degrees with the longitudinal axis. This angle allows an adequate holding force (or wedging action). In an embodiment, the angle may be between 40 and 60 degrees.

In preferred embodiments the shank comprises a main body with the aperture being arranged within the main body, such that the aperture forms a recess in the main body. The main body may comprise a square cross-section or a circular cross-section or an oblong cross-section or a hexagonal cross-section. The aperture is easy to manufacture and can for example be directly performed during the moulding of the shank. Besides, the cross section of the main body can correspond to the cross section of the hole (or blind hole) of the component.

In some embodiments, the main body is extended by a conical body, and the foot end of the shank is the foot end of the conical body. The conical shape facilitate the insertion of the fastening element into the hole and its alignment with a main axis of the hole.

In some embodiments, the aperture is arranged at a non-zero distance from the head end. The distance between the aperture and the head end reinforces the solidity and the stability of the fastening element.

In some embodiments, the clamping portion is attached to the head end.

In some embodiments, the anchoring portion comprises a flange arranged at the head end of the shank. On one side of the flange may be arranged the shank and on the other side may be arranged the clamping portion.

In some embodiments, the clamping portion comprises a C-shaped member, for receiving a pipe. The clamping portion can be adapted to the shape and the form of the structural part to secure.

In some embodiments, the clamping portion is a cable tie comprising a strap including a first end and a free end, wherein the first end is secured to the anchoring portion; a locking head secured to the first end of the strap; a plurality of walls on the locking head forming a strap accepting channel having a strap entry end and a strap exit end.

In some embodiments, the clamping portion comprises a slot for fastening a component. The component can be for example a bolt, and the head of the bolt is slipped into the slot.

In some embodiments, a plurality of walls forms the aperture, and wherein the metal insert partly protrudes from one of the walls. For example, the aperture is formed by a first, a second and a third wall, the second wall extending between the first and the third wall. The first wall may be close to the head end wherein the third wall may be close to the foot end. The metal insert can protrudes from the edge formed by the second and the third wall.

In some embodiments, the metal insert is partly embedded in the third wall.

In some embodiments, the clamping portion and the shank are a one-piece part.

In some embodiments, the clamping portion and the shank are made in a plastic material, and wherein the metal insert is directly overmoulded during the manufacture of the clamping portion and the shank. Others methods could be provided.

According to another embodiment of the invention there is provided a fastening arrangement with the fastening element and a component comprising a hole defined by a component inner wall, wherein the shank of the fastening element is inserted within the hole, and wherein the metal insert interacts with the component inner wall for anchoring the fastening element in the hole.

In some embodiments, the component inner wall is provided with a plurality of ribs. The ribs increase the holding force off the fastening element within the hole.

According to another embodiment of the invention there is provided a fastening system comprising the fastening arrangement and a carrier body having a carrier hole, wherein the component is inserted within the hole and wherein the fastening element inserted within the hole of the component is fastened to the carrier body. The carrier hole can be a through hole.

### BRIEF DESCRIPTION OF THE DRAWINGS

Other characteristics and advantages of the invention will readily appear from the following description of embodiments, provided as non-limitative examples, in reference to the accompanying drawings.

In the drawings:
Fig. 1 is a perspective view of a fastening element of the present invention;
Fig. 2 is a side view of the fastening element of Fig. 1;
Fig. 3 is a perspective view of another embodiment of a fastening element of the present invention;
Fig. 4 is a side view of the fastening element of Fig. 3;
Fig. 5 is a perspective view of another embodiment of a fastening element of the present invention;
Fig. 6 is a perspective view of another embodiment of a fastening element of the present invention;
Fig. 7 is a perspective view of another embodiment of a fastening element of the present invention;
Fig. 8 is a perspective view of the detail VIII of the fastening element of Fig. 7;
Fig. 9 is a cross sectional view of a fastening arrangement of the present invention with the fastening element of Fig. 3 and a component with a hole;
Fig. 10 is a cross sectional view of a fastening system of the present invention with the fastening element of Fig. 3, a component with a hole and a body with a carrier hole.

### DETAILED DESCRIPTION OF THE DISCLOSURE

As seen in the figures, the fastening element 10 comprises a clamping portion 12 and an anchoring portion 14. The anchoring portion 14 is for anchoring the fastening element 10 in a hole 16 (in particular a blind hole) in a component. Different structural parts to be held can be secured to the clamping portion.

The anchoring portion 14 comprises a shank 20. The shank 20 extends along a longitudinal axis X from a head end 22 to a foot end 24. The shank 20 comprises for example a main body 26 extending from the head end 22. The main body 26 can be cylindrical (or with a circular cross-section), as seen in the figures. In others embodiments, the main body may comprise a square cross-section or an oblong cross-section or a hexagonal cross-section. The cross-section of the main body depends on the shape of the hole 16 in the component.

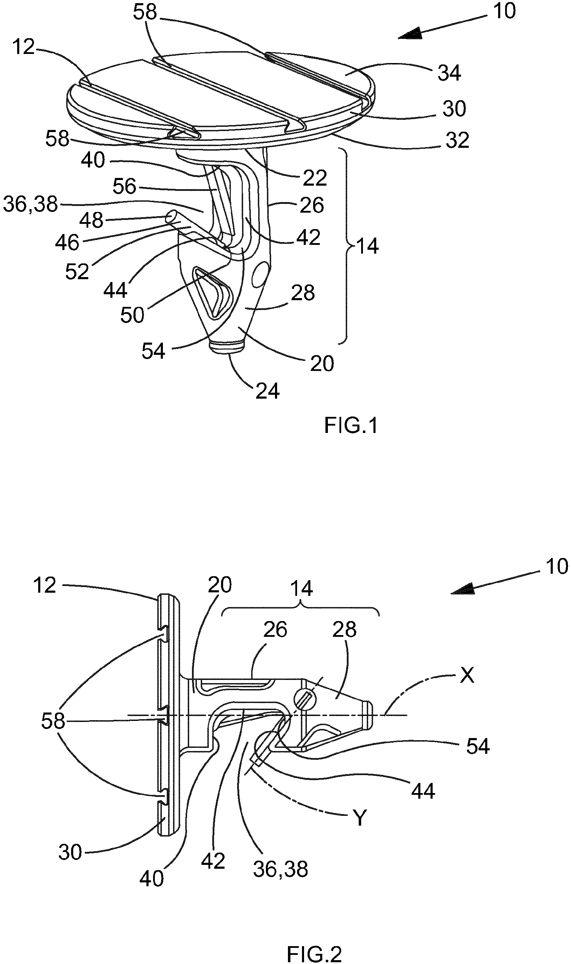

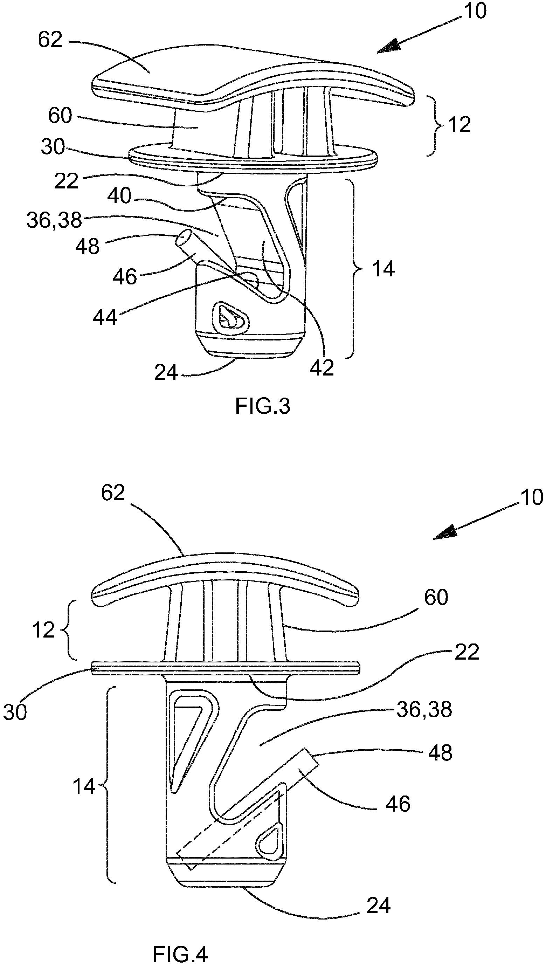

The shank 20 may also comprise a conical body 28, which extends from the main body 26 to the foot end 24. The section of the shank 20 is thus decreasing from the main body 26 to the foot end 24. The section of the shank 20 at the foot end 24 is smaller than the section of the shank 20 along the cylindrical body 26. The length of the conical body 28 along the longitudinal axis X may be substantially the same than the length of the main body 26 along the longitudinal axis X, as illustrated in Fig. 1 and Fig. 2, or can be much smaller than the length of the main body 26 along the longitudinal axis X, as illustrated in Fig. 3, Fig. 4, Fig. 5, Fig. 6, Fig. 7, Fig. 8 or Fig. 9.

In another embodiment, the shank 20 may comprise a main body 26 without any conical body. The shank 20 is made of plastic material.

A flange 30 may be arranged at the head end 22 of the shank 20. The flange 30 comprises a circular cross section and a diameter larger than the sectional diameter of the shank 20. The diameter of the flange 30 is larger than the diameter of the main body 26 of the shank 20. The flange 30 can have a substantially flat first surface 32 arranged toward the shank 20 and a substantially flat second surface 34 arranged in the opposite direction.

The flange 30 and the shank 20 are made of plastic material. Thermoplactics, polyoxymethylene (POM), polyamide (PA), polypropylene (PP) and/or polyethylene (PE) can be used. The flange is integrally formed with the shank 20.

The shank 20 is provided with a recess 36 which forms an aperture 38 of the anchoring portion 14. More particularly the main body 26 of the shank 20 can be provided with the recess 36 forming the aperture 38.

The aperture 38 is defined through a plurality of walls 40, 42, 44. A first wall 40 can be arranged close to the flange 30. The first wall 40 is arranged at a non-zero distance from the flange 30, such that the first wall 40 of the aperture is not taken together with the flange 30. The first wall 40 can be arranged substantially parallel to the first or the second surface 32, 34 of the flange 30. According to another embodiment, the first wall 40 may extend transverse from the plane defined by the first or the second surface 32, 34 of the flange 30.

The second wall 42 extends obliquely from the first wall 40. The second wall 42 may extend substantially parallel to the longitudinal axis X (as seen in Fig. 1 and Fig. 2), or may extend obliquely to the longitudinal axis X (as seen in Fig. 3, Fig. 5, Fig. 6, Fig. 7 or Fig. 8).

The third wall 44 extends obliquely from the second wall 42. For instance, the second wall extends between the first wall 40 and the third wall 44. The third wall 44 is arranged close to the foot end.

A metal insert 46 is partly embedded in the shank 20. The metal insert 46 comprises a free end 48, a mounted end 50 embedded in the shank 20, and a metal insert body 52. Between the free end 48 and the mounted end 50, the metal insert body 52 extends along a holding axis Y.

The metal insert body 52 has for example the shape of a wire, with a circular or quadratic cross section. The mounted end 50 is secured in the shank through overmoulding. The metal insert body 52 can also be partly embedded in the third wall 44 of the aperture 38. The mounted end 50 can be embedded in the edge 54 between the second and the third wall 42, 44.

A portion of the metal insert body can be partly embedded in the third wall. For instance, as seen in the figures, a portion of the metal insert body 52 is embedded in the third wall, such that the angle formed between the third wall and the longitudinal axis X is substantially the same than the angle formed between the holding axis Y and the longitudinal axis X. The angle between the holding axis Y and the longitudinal axis X may be between 30 and 90 degrees, or between 40 and 60 degrees. Half of the section of the metal insert body portion can be embedded in the third wall. The other half can be visible from outside. In others embodiments, depending of the diameter of the metal insert, more or less than the half of the section of the metal insert body portion can be embedded in the third wall.

The free end 48 of the metal insert 46 protrudes from shank 20. The free end 48 of the metal insert 46 extends beyond the third wall 44. More particularly, the portion not embedded in the third wall 44 of the metal insert extends freely beyond the third wall 44.

The free end 48 of the metal insert faces the aperture 38. More particularly the projection of the free end 48 of the metal insert 46 toward the longitudinal axis face the aperture 38. The free end of the metal insert can thus, if needed, be partly or entirely folded in the aperture, in order to match the diameter of the hole 16 in which the fastening element 10 is inserted.

As seen in the figures, the mounted end 50 and a portion of the metal insert body 52 are overmoulded into the shank 20 and secured to the shank 20 only through overmoulding. No other fastening step or manufacturing step are needed to secure the metal insert to the rest of the fastening element 10 (or to the shank 20). For instance, the metal insert 46 is overmoulded during the manufacture of the shank 20.

A reinforcement rib 56 (see Fig. 1 and Fig. 2) can be provided in the aperture 38. For example the reinforcement rib 56 extends from the first wall 40 of the aperture 38 to the edge 54 between the second and the third wall 42, 44 of the aperture 38.

In other embodiments (not shown), the anchoring portion 14 may be provided with two or more metal inserts. The metal inserts can be arranged parallel to each other. The metal inserts can also all extends on one side of the shank, or on two or more side of the shank.

Fig. 1 to Fig. 8 illustrate several embodiments of the clamping portion of the fastening element.

As seen in Fig. 1 and Fig. 2, the clamping portion 12 can comprise one or a plurality of slots 58 extending through the flange 30 in a direction orthogonal to the longitudinal axis X. The slots 58 can be parallel to each other or not. The slots 58 can be used to secure another component or a further clamping tool to the fastening element 10.

As seen in Fig. 3 and Fig. 4, the clamping portion 12 may consist in a gripping element with a constricted region 60 extending from the flange 30 to a top portion. A curved body 62 is arranged at the top portion of the constricted region 60. The curved body 62 and the constricted region 60 can be used to secure or to guide different elements or components.

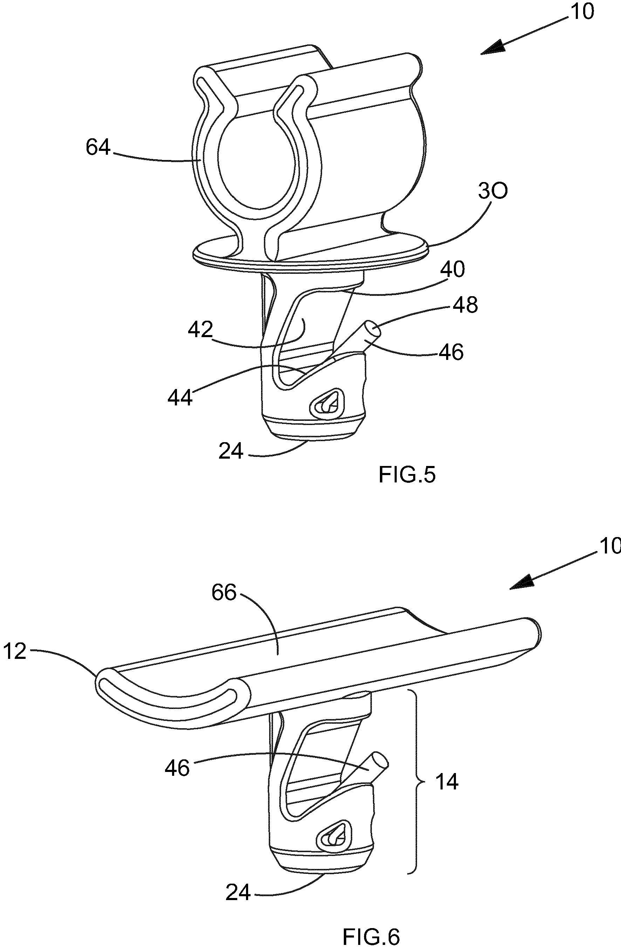

Fig. 5 shows a clamping portion 12 with a C-shaped member 64. The C-shaped member 64 can be resilient sprung open for receiving a pipe, for example.

Fig. 6 show also a clamping portion 12 with a curved body defining a supporting surface 66. The supporting surface 66 can receive or support a pipe, a wire, a cable, a tube, ... with a concave surface on which a cable can rest.

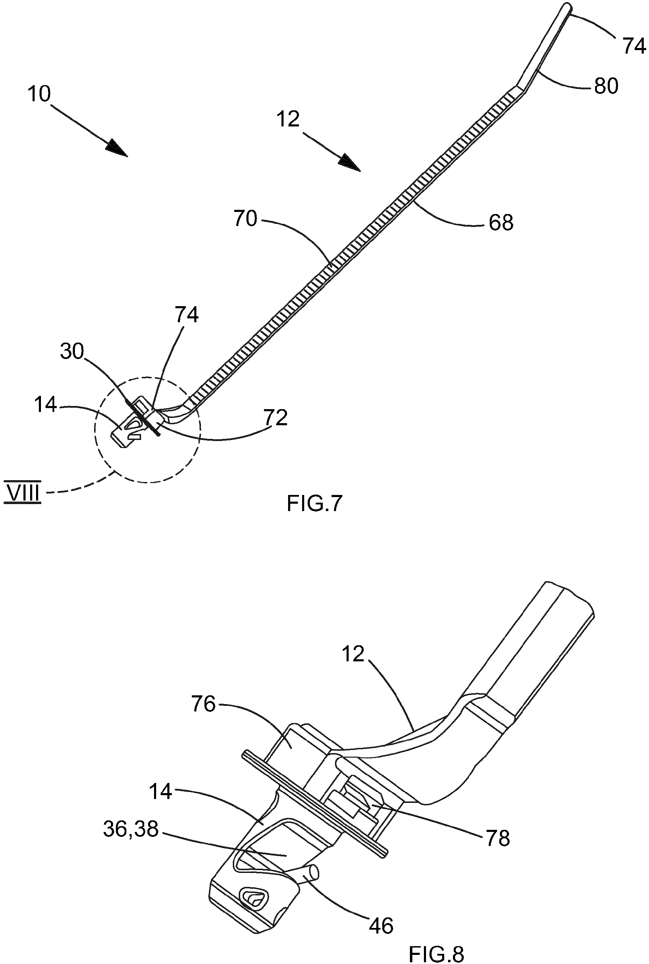

In Fig. 7 and Fig. 8 the clamping portion is a cable tie 68. The cable tie 68 comprises a strap 70 including a first end 72 and a free end 74. The first end 72 is secured to the anchoring portion 14. More particularly, the first end 72 is secured to the flange 30. The clamping portion 12 (or cable tie 68) also comprises a locking head 76 secured to the first end 72 of the strap 70. A plurality of walls on the locking head form a strap accepting channel 78 (see figure 8) having a strap entry end and a strap exit end. The locking head 76 comprises a locking device 80 situated at an angle so as to allow the strap 70 to be inserted through the strap accepting channel 80 but engaging the strap as it is pulled in a removing direction to prevent its removal. Gripping ridges 80 can be formed on the outside surface of the free end (or leading end) of strap 70 and serrations can be formed on the inside surface of the leading end of strap.

The clamping portion 12 may be integrally formed with the anchoring portion 14. In another embodiment, the clamping portion 12 and the anchoring portion 14 may be two different parts.

The clamping portion 12 may adopt different shape and/or function. In an embodiment (not shown, the clamping portion may consist of a slit, to which different elements or components can be fixed. The clamping portion may also be provided with a flat surface.

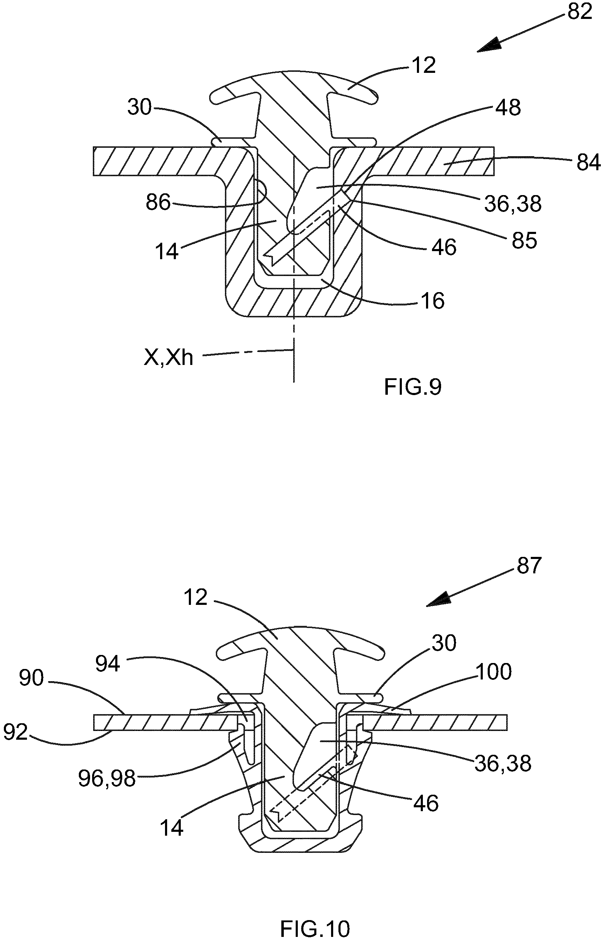

Fig. 9 shows a fastening arrangement 82 with the fastening element 10 and a component 84 comprising the hole 16. The component 84 can be of plastic material or of metal. For example, an aluminum component could be provided. The hole 16 is defined by a component inner wall 86. The hole may be provided with a circular cross section and may have a main axis Xh. The fastening element 10 is inserted into the hole such that the foot end first penetrate into the hole 16. The metal insert 46 interacts with the component inner wall 86 for anchoring the fastening element 10 in the hole 16.

Because of the properties of the metal inset 46, the latest is bent in the direction of the flange 30 when the fastening element is inserted into the hole 16 of the component 84.

The inside radius of the hole is smaller than the distance between the free end 48 and the longitudinal axis X and greater than the radius of the shank 20.

After insertion of the fastening element 10 into the hole, the free end 48 of the metal insert bent toward the shank 20 rests on the inner wall of the hole. A plastic deformation of the metal insert 46 may happen. The component inner wall 86 can be provided with ribs (not shown) for a better anchoring surface of the metal insert 46. The component inner wall 86 may also be flat.

In another embodiment, as seen in Fig. 9, the component inner wall 86 can be provided with a recess 85 adapted to receive the free end of the metal insert 46. The free end of the metal insert 46 inserted into the recess 85 secure the fastening element 10 to the component 84.

For example the force needed to assemble the fastening element into the hole 16 may be between 20 and 60 Newton, whereas forces in the range of 140 Newton are needed for the dismounting of the fastening element 10.

The diameter of the flange 30 is larger than the diameter of the hole and thus the flange rests on the outer perimeter of the hole, outside of the hole. The clamping portion stays outside of the hole and the flange may be used to ensure an insolation of the hole, in order to avoid any corrosion of the component inner wall.

A groove may be provided in the component inner wall 86, in order to assist a disassembly of the fastening element 10 from the component 84. For example, to dismount the fastening element 10, an operator may rotate the fastening element 10 in the hole until the free end of the metal insert penetrates in the groove. The groove may extends straight and parallel to the longitudinal axis X, or may be curved.

Fig. 10 shows a fastening system 87 with the fastening element 10, the component 84 with the hole 16 and a body carrier 88. The body carrier 88 comprises a first surface 90, a second surface 92 and a carrier hole 94. The carrier hole can be a through hole 94. The carrier hole 94 can be circular. The diameter of the carrier hole 94 is slightly bigger than the outer diameter of the hole, such that the lateral walls forming the hole 16 can penetrate in the carrier hole 90.

The hole 16 of the component 84 is first inserted into the carrier hole. The lateral walls forming the hole 16 may be provided, as seen in Fig. 10 with one or several laterally deflectable leg(s) 96 having a clamping shoulder 98 for securing the component 84 in the opening defined by the carrier hole 94 of the body carrier 88. When inserted into the carrier hole 94, the deflectable leg 96 moves toward the main axis Xh until the lateral walls of the blind hole completely penetrate the carrier hole 94. Then, the clamping shoulder 98 moves back in a locked position, where it interacts with the second surface 92 of the body carrier and/or the perimeter forming the carrier hole 94 in order to secure the position of the component and to prevent a removal of the component from the carrier hole 94. The component 84 may have a collar 100 around the opening formed by the hole 16. The collar 100 rests against the first surface 90 of the body carrier.

In a subsequent step, the fastening element 10 is inserted in the hole 16 of the component 84. The fastening element 10 is secured to the component 84 which is itself secured to the body carrier 88. The metal insert 10 may interact with the deflectable leg(s) 96 to force the clamping shoulder in the locked position and to improve the fastening of the component with the carrier. The component 84 is used in Fig. 10 as an intermediate part.

Thus, the fastening element 10 can be indifferently used with a blind hole or through hole. The fastening element 10 can be used in a large range of configuration. Its anchoring portion assure a robust anchoring with blind hole and through hole, whereas its clamping portion can be adapted to the component or element to be fastened with.

## Claims

1. Fastening element (10) comprising a clamping portion (12) and an anchoring portion (14) for anchoring the fastening element in a hole (16) in a component (84),
wherein the anchoring portion (14) has a shank extending along a longitudinal axis (X) from a head end to a foot end, and a metal insert (46) having a free end and a mounted end embedded in the shank, wherein the metal insert (46) extends along a holding axis, wherein the holding axis (Xh) forms a non-zero angle with the longitudinal axis (X), wherein the shank comprises an aperture (38) between the head end and the metal insert (46), and wherein the free end of the metal insert (46) faces the aperture (38).

2. Fastening element (10) according to claim 1, wherein the holding axis (Xh) forms an angle between 30 and 90 degrees with the longitudinal axis (X).

3. Fastening element (10) according to claim 1 or 2, wherein the shank comprises a main body (26) with the aperture (38) being arranged within the main body, such that the aperture (38) forms a recess in the main body (26), wherein the main body (26) comprises a square cross-section or a circular cross-section or an oblong cross-section or a hexagonal cross-section.

4. Fastening element (10) according to claim 3, wherein the main body is extended by a conical body, and wherein the foot end of the shank is the foot end of the conical body.

5. Fastening element (10) according to any of claims 1 to 4, wherein the aperture (38) is arranged at a non-zero distance from the head end.

6. Fastening element (10) according to any of claims 1 to 5, wherein the clamping portion is attached to the head end.

7. Fastening element (10) according to claim any of claims 1 to 6, wherein the clamping portion is a cable tie comprising:
- a strap including a first end and a free end, wherein the first end is secured to the anchoring portion;
- a locking head secured to the first end of the strap;
- a plurality of walls on the locking head forming a strap accepting channel having a strap entry end and a strap exit end.

8. Fastening element (10) according to any of claims 1 to 7, wherein the clamping portion (12) comprises a slot (58) for fastening a component.

9. Fastening element (10) according to any of claims 1 to 8, wherein a plurality of walls forms the aperture (38), and wherein the metal insert (46) partly protrudes from one of the walls.

10. Fastening element (10) according to any of claims 1 to 9, wherein the clamping portion (12) and the shank (20) are made in a plastic material, and wherein the metal insert is directly overmoulded during the manufacture of the clamping portion and the shank.

11. Fastening arrangement (82) with:
a. a fastening element (10) according to any of claims 1 to 10, and
b. a component comprising a hole defined by a component inner wall, wherein the shank of the fastening element is inserted within the hole, and wherein the metal insert interacts with the component inner wall for anchoring the fastening element in the hole.

12. Fastening arrangement (82) according to claim 11, wherein the component inner wall is provided with a plurality of ribs.

13. Fastening system (87) comprising the fastening arrangement (82) of claim 11 or claim 12 and a carrier body (88) having a carrier hole (94), wherein the component is inserted within the hole and wherein the fastening element inserted within the hole of the component is fastened to the carrier body.
